# EUROPEAN PATENT APPLICATION

(11) **EP 1 609 742 A2**
(43) Date of publication of application: **28.12.2005**
(21) Application number: 05447147.9
(22) Date of filing: 23.06.2005
(51) Int. Cl.: B65D 83/14

(54) **Milk foam preparation in pressurized packaging**

(30) Priority: 24.06.2004 BE 200400312
(71) Applicant: Cruysberghs, Rudiger Jozef Charles, 1050 Brussels (BE)
(72) Inventor: Cruysberghs, Rudiger Jozef Charles, 1050 Brussels (BE)

(57) **Abstract**

Cylindrical packaging receptacle containing milk foam hereafter also called frothed milk preparation under pressure generated by propellant, for the making of cappuccino, for warm beverages, for cold beverages, for toppings, desserts, ice creams, ice, cakes and pastries, sabayon, milk shakes, smoothies, characterized in that it is manufactured from rigid material and comprises at least 1 enclosed product chamber (1) in which the preparations are packaged, at least 1 valve (5) on said product chamber (1) for the emptying and if applicable filling of said product chamber (1), a pressure chamber containing a propellant for pressurizing of the product in the product chamber (1) for the emptying of the product chamber (1) via the valve (5).

## Description

The invention concerns a packaging receptacle filled with a preparation for milk foam hereafter also called frothed milk which, under a defined pressure applied by propellant, produces frothed milk at the point of discharge for the making of cappuccino, for warm beverages, for cold beverages, for toppings, desserts, ice creams, ice, cakes and pastries, sabayon, milk shakes, smoothies.

The packaging receptacle is extremely well suited for the packaging, transport and delivery of the product.

It is well known that frothed milk is obtained by injecting steam into milk or by an integral system in a coffee-maker or by whipping by means of a device such as a mixer or a rotary beater. A packaging receptacle is opened in this case for the use of milk. Following whipping, the frothed milk is transferred or served up in the majority of applications by means of a spoon or other utensil. A disadvantage of this arrangement is that opening of the packaging receptacle places the milk in contact with the ambient air, which affects the quality of the milk or the preparation: contamination, oxidation, drying-out, mould formation, and souring of the milk are caused. Another disadvantage is that supplementary apparatus, utensils or equipment must be used for the production of the frothed milk.

In order to overcome these disadvantages, preparations are created under pressure within a packaging receptacle in accordance with the main characteristic of the invention, whereby a froth and a mousse are obtained at the time of delivery from the packaging receptacle. The packaging receptacle chiefly comprises a cylinder with a valve or tap, comprising at least an enclosed product chamber in which the preparation is packaged, a valve or a connecting piece fitted to said product chamber for the emptying and if applicable filling of said chamber, a pressure chamber possessing at least a pressure medium for the pressurizing of said pressure chamber for the purpose of exerting a pressure upon the product chamber for the emptying of the latter via the valve and/or connecting piece stated on the product chamber. By this means, the product can be forced out of the packaging receptacle via the valve without the product coming into contact with an external pressure medium and thus without the quality or possibly the sterility of the product being affected. Where the product is packed sterile, this arrangement also ensures in the majority of cases that its sterility is retained. One of the well-known applications is whipped cream. The disadvantage of this application is that it is generally a compact product with a high fat content.

By way of example and without limiting the scope of the claims, a more comprehensive description follows of certain embodiments of the packaging receptacle for frothed milk in accordance with the invention.

This description refers to the accompanying drawings, whereby:
Fig. 1 represents a cylindrical packaging receptacle for frothed milk preparation in its simplest form, comprising a preparation under pressure with nozzle.
Fig. 2 represents a cylindrical packaging receptacle for frothed milk featuring a protective film (10) and filled with preparation in the product chamber.
Fig. 3 represents a cylindrical packaging receptacle for frothed milk filled with preparation and featuring a connecting piece (9) or quick-fit coupling.
Fig. 4 represents a cylindrical packaging receptacle for frothed milk filled with preparation in a dispenser apparatus.
Fig. 5 represents a cylindrical packaging receptacle filled with preparation and featuring a pressure capsule.
Fig. 6 represents a cylindrical packaging receptacle filled with preparation and featuring a piston, which may or may not be equipped with a supplementary seal (8), for expulsion of the preparation.

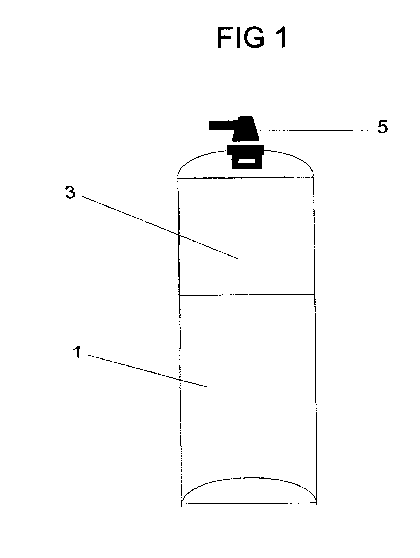

Fig. 1 represents a packaging receptacle partly filled with a preparation which is placed under pressure by means of a propellant. Turning the receptacle with the nozzle or coupling downwards causes the preparation to reach the opening of the nozzle. When the valve of the nozzle is activated, the preparation flows out of the packaging receptacle under pressure. A whipped effect such as foaming or moussing is obtained owing to the pressure discharge of the propellant.

The whipping-up effect obtained varies according to the preparation and the propellant. In the majority of cases, the propellant is a compound, a mixture of several gases. It may however consist of a single gas (type). The propellant may be packaged in either liquid or gaseous form

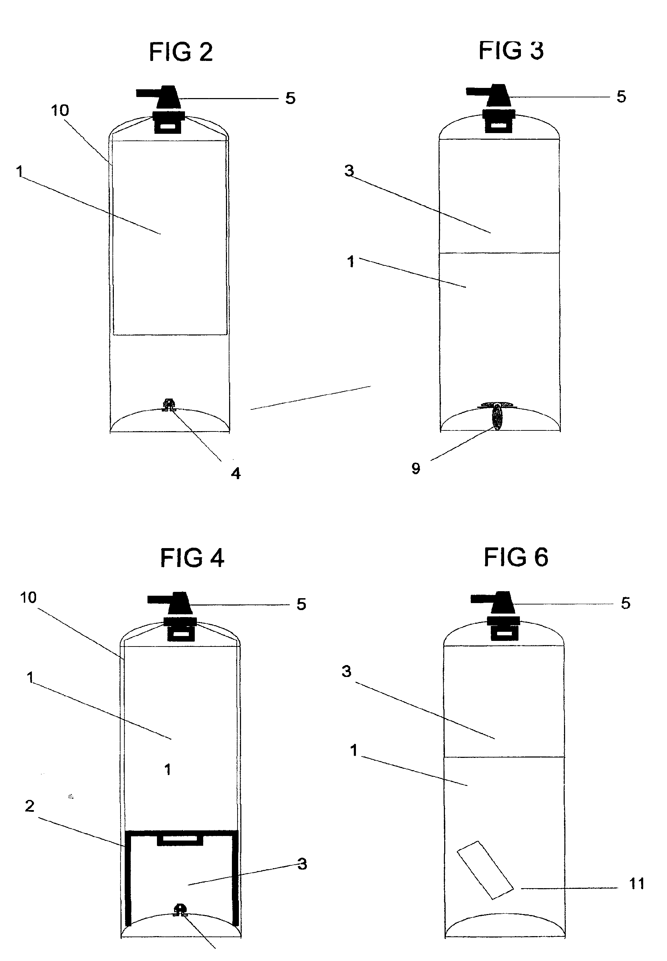

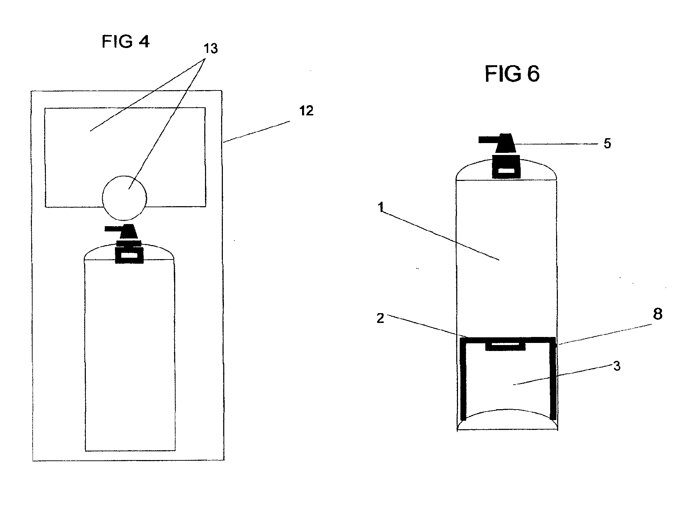

Fig. 4 represents a cylindrical packaging receptacle containing a frothed milk preparation in a dispenser. This dispenser may be equipped with one or more cylindrical packaging receptacles containing frothed milk preparation and equipped with cooling elements, or cooling equipment, possibly involving dry ice, cold plates, a compressor, or any other form of cooling system. The intention is for the dispenser (12) to be equipped with a mechanism (13) which opens and closes the valve (5) of the product chamber in order to deliver the preperation from the product chamber. This dispenser (12) may be operated by manual means and may possess a semiautomatic or fully automatic mechanism (13) with the facility for dosed delivery.

Fig. 6 represents a cylindrical packaging receptacle containing preparation and featuring a piston, which may or may not feature a supplementary seal, which separates the product chamber from the pressure chamber. The order of the elements is not decisive and may be in line, adjacent, one above the other or in others.

A distribution mechanism (not described) may also be provided for the mixing of different products, i.e. for the obtaining of mixed preparation.

It is obvious that the material employed for the cylindrical packaging receptacle containing the frothed milk preparation may be of any suitable type, that the packaging receptacle may vary in its dimensions and form, that any suitable pressure medium may be employed, that the valves of the product chamber may be of any suitable type and/or material and may be fitted in any position, that the piston may be of any suitable type and material, that the seal may be of any suitable type and/or material and may be positioned at any point, that the plug (if applicable) of the pressure chamber may be of any suitable type and/or material and may be fitted in any position, that the connecting pieces and/or quick-fit couplers (9) may be of any suitable type and/or material and may be fitted in any position, that film (10) may be of any suitable type and/or material and may be fitted in any position and manner within the cylindrical packaging receptacle containing frothed milk preparation and may be attached in any position and manner to the piston (Fig. 4).

## Claims

1. Cylindrical packaging receptacle containing milk foam hereafter also called frothed milk preparation under pressure generated by propellant, for the making of cappuccino, for warm beverages, for cold beverages, for toppings, desserts, ice creams, ice, cakes and pastries, sabayon, milk shakes, smoothies, **characterized in that** it is manufactured from rigid material and comprises at least 1 enclosed product chamber (1) in which the preparations are packaged, at least I valve (5) on said product chamber (1) for the emptying and if applicable filling of said product chamber (1), a pressure chamber (3) containing a propellant for the exertion of pressure upon the product in the product chamber (1) for the emptying of the product chamber (1) via the valve (5).

2. Cylindrical packaging receptacle in accordance with Claim 1, equipped with an aperture for a 1-inch (1") valve (5).

3. Cylindrical packaging receptacle in accordance with Claim 1, equipped with an aperture for a valve (5) larger than 1 inch (1").

4. Cylindrical packaging receptacle in accordance with Claim 1, equipped with an aperture for a valve (5) smaller than 1 inch (1").

5. Cylindrical packaging receptacle in accordance with Claim 1, in which, in order to generate the desired whipped effect, the gas treatment of the frothed milk preparation is effected in a compartment outside the cylindrical packaging receptacle, prior to insertion of the preparation under pressure into the cylindrical packaging receptacle.

6. Cylindrical packaging receptacle in accordance with Claim 1 in which the pressure chamber is placed under pressure by means of a plug.

7. Cylindrical packaging receptacle in accordance with Claim 1 in which pressure is exerted upon the pressure chamber (3) along the plug (4), along the side of the plug (4).

8. Cylindrical packaging receptacle in accordance with Claim 1 in which the pressure chamber (3) is placed under pressure by means of a valve, coupling piece or connecting piece (9).

9. Cylindrical packaging receptacle in accordance with Claim 1, in which a pouch manufactured from film or a laminate is attached to the cylindrical packaging receptacle and in which the foamed milk preparations are explicitly kept from the walls of the packaging receptacle and from the pressure chamber. The foamed milk preparation is therefore completely isolated.

10. Cylindrical packaging receptacle in accordance with Claim 1 in which the pressure chamber is placed under pressure by means of a capsule featuring a pressure system.

11. Cylindrical packaging receptacle in accordance with Claim 1 in which a seal (8) is fitted to the piston (2).

12. Cylindrical packaging receptacle in accordance with Claim 1 in which the pressure chamber is placed under pressure by means of a chemical reaction.

13. Cylindrical packaging receptacle in accordance with Claim 1 in which the pressure chamber is placed under pressure by means of a liquified gas.

14. Cylindrical packaging receptacle in accordance with Claim 1 in which the pressure chamber is placed under pressure by means of a compressed gas.

15. Cylindrical packaging receptacle in accordance with Claim 1 in which the pressure chamber is placed under pressure by means of a spring.

16. Cylindrical packaging receptacle in accordance with Claim 1 in which the pressure chamber is placed under pressure by means of a mixture of gases.

17. Cylindrical packaging receptacle in accordance with Claim 1 in which the pressure chamber is placed under pressure by means of nitrogen.

18. Cylindrical packaging receptacle in accordance with Claim 1, **characterized in that** the packaging features a decorative finish.

19. Cylindrical packaging receptacle in accordance with Claim 1, **characterized in that** it is employed in a dispenser.

20. Cylindrical packaging receptacle in accordance with Claim 1, **characterized in that** it is employed in distribution apparatus.

21. Cylindrical packaging receptacle in accordance with Claim 1, **characterized in that** it is employed in a trolley for use on board aircraft, trains, boats, coaches.

22. Cylindrical packaging receptacle in accordance with Claim 1, **characterized in that** it is employed in a vending machine.

23. Cylindrical packaging receptacle in accordance with Claim 1, **characterized in that** it is employed in a catering facility on board aircraft, trains, boats, coaches.

24. Cylindrical packaging receptacle in accordance with Claim 1, **characterized in that** it is employed in an array of several units.

25. Cylindrical packaging receptacle in accordance with Claim 1, **characterized in that** it is employed in a catering network.

26. Cylindrical packaging receptacle in accordance with Claim 1, **characterized in that** it is employed in a fast-food chain.

27. Cylindrical packaging receptacle in accordance with Claim 1, **characterized in that** along the top of the product chamber (3), the piston possesses a deeper cavity into which the underside of the valve can sink and an elevation at the top in order to provide a minimum residual value.

28. Cylindrical packaging receptacle in accordance with Claim 1, **characterized in that** the piston is manufactured from metal such as tin with plastic laminate.

29. Cylindrical packaging receptacle in accordance with Claim 1, **characterized in that** the piston is manufactured from metal such as tin with a glaze finish.

30. Cylindrical packaging receptacle in accordance with Claim 1, **characterized in that** the piston is manufactured from aluminium, which may or may not be coated with a glaze finish.

31. Cylindrical packaging receptacle in accordance with Claim 1, **characterized in that** the piston is manufactured from aluminium with a plastic laminate.

32. Cylindrical packaging receptacle in accordance with Claim 1, **characterized in that** the piston is manufactured from plastic.

33. Cylindrical packaging receptacle in accordance with Claim 1, **characterized in that** the plug comprises two parts, the first being a receptacle, the second being a ball which seals the orifice for the gas or the means of pressurization of the pressure chamber (3) by insertion or displacement of said ball.
